# EUROPEAN PATENT APPLICATION

(11) **EP 4 603 368 A1**
(43) Date of publication of application: **20.08.2025**
(21) Application number: 23890112.8
(22) Date of filing: 24.05.2023
(51) Int. Cl.: B62D 21/02

(54) **LOWER VEHICLE BODY ARRANGEMENT STRUCTURE AND VEHICLE**

(30) Priority: 16.11.2022 CN 202211438911
(71) Applicant: BYD Company Limited, Shenzhen, Guangdong 518118 (CN)
(72) Inventor: LIAN, Yubo, Shenzhen, Guangdong 518118 (CN); LIAO, Yinsheng, Shenzhen, Guangdong 518118 (CN); ZHANG, Feng, Shenzhen, Guangdong 518118 (CN); ZHAO, Gaoming, Shenzhen, Guangdong 518118 (CN); SUN, Xianmeng, Shenzhen, Guangdong 518118 (CN)
(74) Representative: Taor, Simon Edward William
(86) International application number: PCT/CN2023/096018
(87) International publication number: WO 2024/103668

(57) **Abstract**

A lower vehicle body arrangement structure (100), comprising a vehicle body longitudinal beam (1), an exhaust pipe mounting bracket (2) and a first exhaust pipe (3), wherein the exhaust pipe mounting bracket (2) is connected to the vehicle body longitudinal beam (1), and a first cavity is formed between the exhaust pipe mounting bracket (2) and the vehicle body longitudinal beam (1); and the first exhaust pipe (3) is accommodated in the first cavity, and a projection of the first exhaust pipe (3) on a horizontal plane at least partially overlaps with a projection of the vehicle body longitudinal beam (l) on the horizontal plane. The vehicle body arrangement structure can protect the first exhaust pipe to prevent the first exhaust pipe from being bumped so as to prolong the service life of the first exhaust pipe, and optimize an arrangement space in a width direction of a vehicle body so as to increase the arrangement utilization rate of a lower vehicle body. Further disclosed is a vehicle comprising the lower vehicle body arrangement structure.

## Description

### CROSS-REFERENCE TO RELATED APPLICATIONS

The present disclosure claims priority to Chinese Patent Application No. 202211438911.3, entitled "LOWER VEHICLE BODY ARRANGEMENT STRUCTURE AND VEHICLE" and filed by BYD Co., Ltd. on November 16, 2022.

### FIELD

The present disclosure relates to the technical field of vehicles, and specifically, to a lower vehicle body arrangement structure and a vehicle.

### BACKGROUND

Hybrid electric vehicles feature energy saving, low emission, and the like, have attracted high attention from the automobile industry, and become a focus of automotive research and development.

The hybrid electric vehicle features long continuous working time and good dynamics of an engine, and can have the advantages of no pollution and low noise of a motor. Therefore, the hybrid electric vehicle includes at least an engine system and an electric drive system, and both the engine system and the electric drive system are arranged at a lower vehicle body. Therefore, how to improve arrangement space utilization of the lower vehicle body is a current technical problem to be urgently solved.

### SUMMARY

The present disclosure is intended to solve one of technical problems in the related art at least to some extent.

Therefore, the present disclosure provides a lower vehicle body arrangement structure.

The lower vehicle body arrangement structure according to the present disclosure includes: a vehicle body longitudinal beam; an exhaust pipe mounting bracket, where the exhaust pipe mounting bracket is connected to the vehicle body longitudinal beam, and a first cavity is formed between the exhaust pipe mounting bracket and the vehicle body longitudinal beam; and a first exhaust pipe. The first exhaust pipe is accommodated in the first cavity, and a projection of the first exhaust pipe on a horizontal plane at least partially overlaps a projection of the vehicle body longitudinal beam on the horizontal plane.

In the present disclosure, the first exhaust pipe is arranged in the first cavity formed between the exhaust pipe mounting bracket and the vehicle body longitudinal beam, so that the first exhaust pipe can be protected by the vehicle body longitudinal beam and the exhaust pipe mounting bracket, to prevent the first exhaust pipe from being bumped and prolong the service life of the first exhaust pipe.

In addition, the projection of the first exhaust pipe on the horizontal plane at least partially overlaps the projection of the vehicle body longitudinal beam on the horizontal plane when a change amount of a lower vehicle body is minimum. Therefore, the first exhaust pipe is arranged in a width direction of a vehicle body and may move outward as far as possible, so that an arrangement space in the width direction of the vehicle body can be maximized, to better facilitate arrangement of another system for the lower vehicle body, and further improve arrangement utilization of the lower vehicle body.

The present disclosure further provides a vehicle with the lower vehicle body arrangement structure.

Some of the additional aspects and advantages of the present disclosure are set forth in the following description, and some become apparent from the following description, or are learned by practice of the present disclosure.

### BRIEF DESCRIPTION OF THE DRAWINGS

FIG. 1 is a schematic structural diagram of a lower vehicle body arrangement structure according to an embodiment of the present disclosure;
FIG. 2 is a schematic structural sectional view of a lower vehicle body arrangement structure according to an embodiment of the present disclosure;
FIG. 3 is a schematic diagram of an overall exploded structure of a lower vehicle body arrangement structure according to another embodiment of the present disclosure;
FIG. 4 is a schematic structural diagram of a vehicle body longitudinal beam according to an embodiment of the present disclosure;
FIG. 5 is a schematic structural diagram of an exhaust pipe mounting bracket according to an embodiment of the present disclosure;
FIG. 6 is a schematic structural diagram of a shock-absorbing device according to an embodiment of the present disclosure;
FIG. 7 is a schematic structural diagram of a first exhaust pipe according to an embodiment of the present disclosure;
FIG. 8 is a sectional view of a first exhaust pipe taken along line A-A according to an embodiment of the present disclosure;
FIG. 9 is a schematic structural diagram of a third exhaust pipe according to an embodiment of the present disclosure; and
FIG. 10 is a schematic structural diagram of a second exhaust pipe according to an embodiment of the present disclosure.

### DETAILED DESCRIPTION

Embodiments of the present disclosure are described in detail below, and examples of the embodiments are shown in accompanying drawings, where the same or similar elements or the elements having same or similar functions are denoted by the same or similar reference signs throughout the description. The embodiments described below with reference to the accompanying drawings are exemplary, and are intended to explain the present disclosure and cannot be construed as a limitation to the present disclosure.

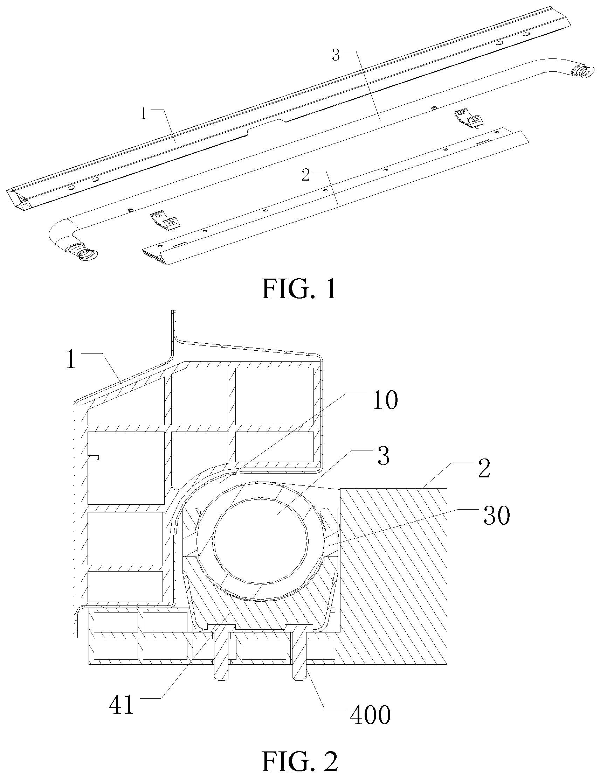

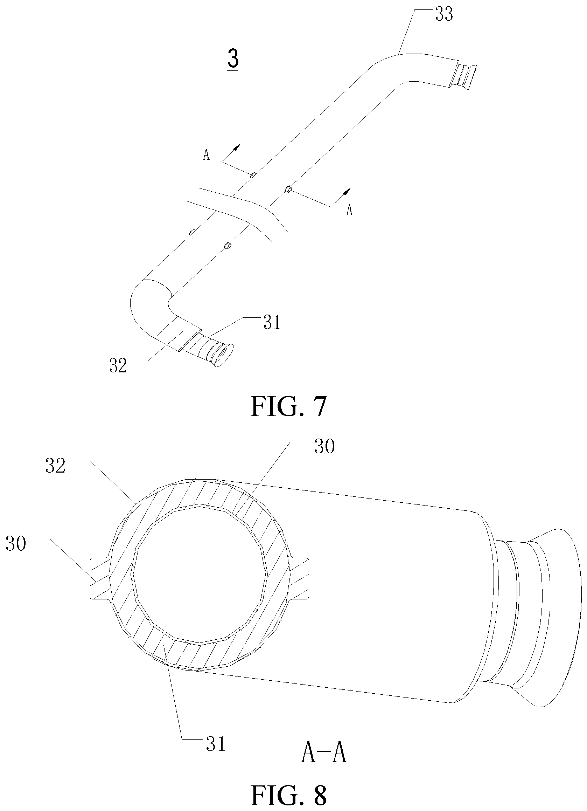

A lower vehicle body arrangement structure 100 according to an embodiment of the present disclosure is described below with reference to FIG. 1 to FIG. 10.

Referring to FIG. 1 and FIG. 2, the lower vehicle body arrangement structure 100 includes a vehicle body longitudinal beam 1, an exhaust pipe mounting bracket 2, and a first exhaust pipe 3.

The exhaust pipe mounting bracket 2 is connected to the vehicle body longitudinal beam 1, and a first cavity is formed between the exhaust pipe mounting bracket and the vehicle body longitudinal beam. The first exhaust pipe 3 is accommodated in the first cavity, and a projection of the first exhaust pipe on a horizontal plane at least partially overlaps a projection of the vehicle body longitudinal beam on the horizontal plane.

In this embodiment, the first exhaust pipe is arranged in the first cavity formed between the exhaust pipe mounting bracket and the vehicle body longitudinal beam, so that the first exhaust pipe can be protected by the vehicle body longitudinal beam and the exhaust pipe mounting bracket, to prevent the first exhaust pipe from being bumped and prolong the service life of the first exhaust pipe. In addition, the projection of the first exhaust pipe on the horizontal plane at least partially overlaps the projection of the vehicle body longitudinal beam on the horizontal plane when a change amount of a lower vehicle body is minimal. Therefore, the first exhaust pipe is arranged in a width direction of a vehicle body and may move outward as far as possible, so that an arrangement space in the width direction of the vehicle body can be maximized, to better facilitate arrangement of another system for the lower vehicle body, and further improve arrangement utilization of the lower vehicle body.

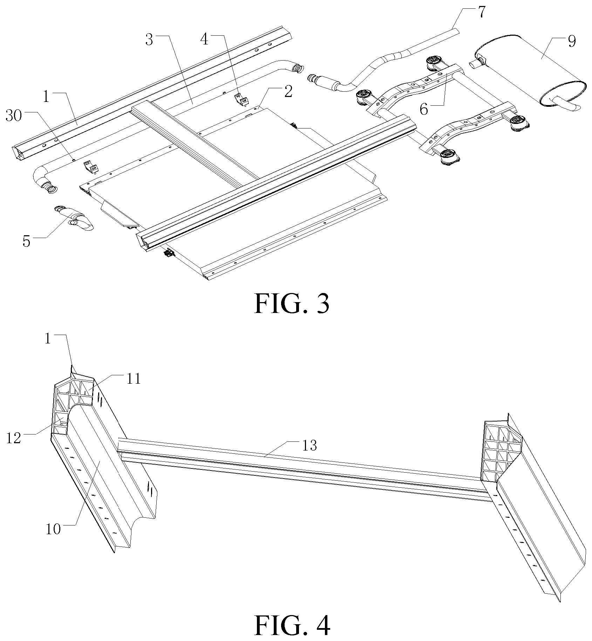

Based on this embodiment, in another embodiment, referring to FIG. 3, the vehicle body longitudinal beam is a sill beam.

The vehicle body longitudinal beam of this embodiment is the sill beam. The first exhaust pipe is arranged in a width direction of a vehicle body and may further move outward, so that an arrangement space in the width direction of the vehicle body can be maximized, to improve arrangement space utilization of the lower vehicle body.

Based on this embodiment, in another embodiment, referring to FIG. 3, the exhaust pipe mounting bracket is a battery pack fixing bracket.

One side of the exhaust pipe mounting bracket of this embodiment is used for fixing a battery pack, and the other side thereof is used for mounting the first exhaust pipe, so that the bracket is reused. This optimizes the arrangement space in the width direction of the vehicle body, improves the arrangement space utilization of the lower vehicle body, and reduces a bracket demand, thereby reducing costs of a whole vehicle.

Based on this embodiment, in another embodiment, referring to FIG. 4, an inner side of the vehicle body longitudinal beam 1 is provided with a first recessed portion 10, a second recessed portion is formed in the exhaust pipe mounting bracket 2, and the first recessed portion 10 is provided opposite to the second recessed portion to form the first cavity.

In this embodiment, the vehicle body longitudinal beam includes a first longitudinal beam area 11 and a second longitudinal beam area 12. The first longitudinal beam area 11 and a second longitudinal beam area 12 are at a preset angle to form the first recessed portion 10. The preset angle is generally around 90°.

The first longitudinal beam area 11 and the second longitudinal beam area 12 form the first recessed portion 10, and the first recessed portion 10 is configured to accommodate the first exhaust pipe, so that the first exhaust pipe can be protected, to prevent the first exhaust pipe from being bumped, and prolong the service life of the first exhaust pipe. In addition, therefore, the first exhaust pipe is arranged on an inner side of the sill beam outward (outward in the width direction of the vehicle body), so that an arrangement space in the width direction of the vehicle body can be maximized, to better facilitate arrangement of another system for the lower vehicle body, and further improve arrangement utilization of the lower vehicle body.

The first longitudinal beam area 11 is connected to a cross beam 13 to implement a lateral anti-collision function.

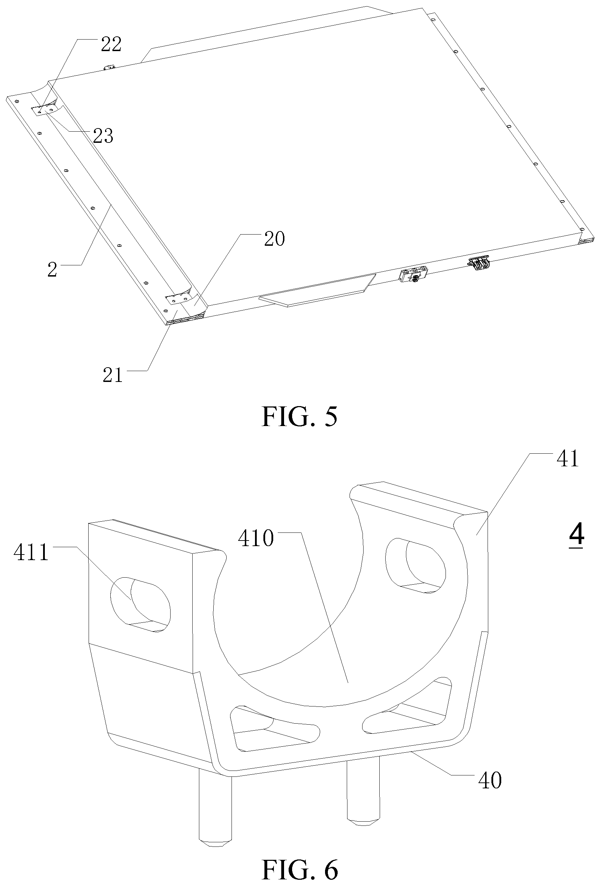

Based on this embodiment, in another embodiment, referring to FIG. 5, the exhaust pipe mounting bracket 2 is a battery pack fixing bracket, and the battery pack fixing bracket includes a first connecting section 20 and a second connecting section 21. The first connecting section 20 and the second connecting section 21 are arranged at an included angle to form a second recessed portion. The second connecting section is connected to the vehicle body longitudinal beam, and the first connecting section is configured as a partial structure of a battery pack protective frame.

In this embodiment, the first connecting section and the second connecting section are connected at a preset angle, and form, with the first recessed portion 10 provided in the vehicle body longitudinal beam, the first cavity that satisfies the first exhaust pipe.

To increase the size of the first cavity, the preset angle generally ranges from 80° to 110°.

Based on this embodiment, in another embodiment, the second connecting section 21 extends outward from a bottom of the first connecting section 20.

Based on this embodiment, in another embodiment, referring to FIG. 3, the lower vehicle body arrangement structure 100 further includes a shock-absorbing device 4.

The shock-absorbing device 4 is arranged in the first cavity, and the first exhaust pipe is arranged at the shock-absorbing device 4. The shock-absorbing device 4 is configured to reduce vibration caused by engine exhaust flowing through the first exhaust pipe.

In this embodiment, the shock-absorbing device 4 is arranged, so that the vibration caused by the engine exhaust flowing through the first exhaust pipe is reduced, thereby improving NVH performance of the whole vehicle.

Based on this embodiment, in another embodiment, referring to FIG. 6, the shock-absorbing device 4 includes a mounting part 40 and a shock-absorbing part 41.

The mounting part 40 is connected to the exhaust pipe mounting bracket, and the shock-absorbing part 41 is arranged at the mounting part 40. The shock-absorbing part 41 is configured to accommodate the first exhaust pipe and reduce the vibration caused by the engine exhaust flowing through the first exhaust pipe.

In this embodiment, the mounting part 40 is fixedly connected to the exhaust pipe mounting bracket, thereby improving stability of the shock-absorbing device 4. In addition, the shock-absorbing part 41 in this solution may be configured to accommodate the first exhaust pipe, to improve stability of the first exhaust pipe, and may also be configured to reduce the vibration caused by the engine exhaust flowing through the first exhaust pipe, so as to improve the NVH performance of the whole vehicle.

Based on this embodiment, in another embodiment, referring to FIG. 5 and FIG. 6, the exhaust pipe mounting bracket 2 is provided with a mounting hole 22, and the mounting part 40 includes a first mounting column 400. The first mounting column 400 and the mounting hole 22 are configured to connect the shock-absorbing device 4 to the exhaust pipe mounting bracket.

In this embodiment, the first mounting column 400 is inserted into the mounting hole 22 to connect the shock-absorbing device 4 to the exhaust pipe mounting bracket, thereby improving connection stability of the shock-absorbing device 4 and the exhaust pipe mounting bracket. It should be noted that, in a related art, other connection manners are also within the protection scope of this embodiment.

Based on this embodiment, in another embodiment, the shock-absorbing part 41 is made of a shock-absorbing material, the shock-absorbing part 41 is provided with a U-shaped groove 410, and the first exhaust pipe is accommodated in the U-shaped groove 410.

The shock-absorbing part 41 of this embodiment includes the U-shaped groove 410, and a shape of the U-shaped groove 410 matches a shape of the first exhaust pipe, thereby improving the stability of the first exhaust pipe. In addition, the shock-absorbing part 41 is made of a rubber material, and the shock-absorbing part 41 is connected to the mounting part 40 into an integral part through vulcanization, thereby improving an overall strength of the shock-absorbing device 4.

Based on this embodiment, in another embodiment, referring to FIG. 3 and FIG. 6, the first exhaust pipe is provided with a first limiting member 30, and the shock-absorbing part 41 is provided with a second limiting member 411 matched with the first limiting member 30. The first limiting member 30 and the second limiting member 411 cooperate to prevent the first exhaust pipe from rotating and moving back and forth.

In this embodiment, the first limiting member 30 of the first exhaust pipe and the second limiting member 411 of the shock-absorbing part 41 cooperate to prevent the first exhaust pipe from rotating and moving back and forth, thereby preventing falling of a connection part of the exhaust pipe caused by vibration of the engine exhaust, and further improving connection stability of the exhaust pipe.

Based on this embodiment, in another embodiment, referring to FIG. 3 and FIG. 6, the first limiting member 30 includes a protrusion, and the second limiting member 411 includes a limiting hole. A shape of the protrusion matches a shape of the limiting hole.

In this embodiment, the protrusion and the limiting hole are matched to prevent the first exhaust pipe from rotating and moving back and forth, and the structure is simple and easy to implement, reduces costs, is also easy to assemble, and reduces assembly difficulty. It should be noted that, in a related art, other structures for preventing rotation and back-and-forth movement are also within the protection scope of this embodiment.

Based on this embodiment, in another embodiment, referring to FIG. 5, the exhaust pipe mounting bracket is provided with a groove 23, the mounting part 40 is arranged in the groove 23, and part of the shock-absorbing part 41 is embedded in the groove.

In this embodiment, the shock-absorbing part 41 is embedded in the groove. Therefore, the thickness of the shock-absorbing part 41 can be optimized within a limited space. A large thickness of the shock-absorbing part 41 indicates a better shock-absorbing effect of the shock-absorbing part 41, and then NVH performance of the whole vehicle is improved.

Based on this embodiment, in another embodiment, the first exhaust pipe includes a first pipe body 31, a heat insulation layer 32, and a second pipe body 33.

An exhaust channel suitable for circulating engine exhaust is formed inside the first pipe body 31. The second pipe body 33 covers part of a periphery of the first pipe body 31, and the heat insulation layer 32 is arranged between the first pipe body 31 and the second pipe body 33.

In this embodiment, by the arrangement of the heat insulation layer 32, excessive heat of the exhaust pipe is prevented from being transferred to the outside, so as to prevent the vehicle body longitudinal beam from overheating or prevent the exhaust pipe mounting bracket from overheating. In addition, in this embodiment, the second pipe body 33 is arranged to enhance a strength of the entire exhaust pipe.

Based on this embodiment, in another embodiment, referring to FIG. 3, the lower vehicle body arrangement structure further includes a third exhaust pipe 5.

The third exhaust pipe 5 is connected to a first end of the first exhaust pipe, and the third exhaust pipe 5 is configured to reduce vibration caused by engine exhaust.

In this embodiment, shock absorption is first performed by the third exhaust pipe 5, and then performed by the first exhaust pipe, so that a shock absorption effect is improved through double shock absorption.

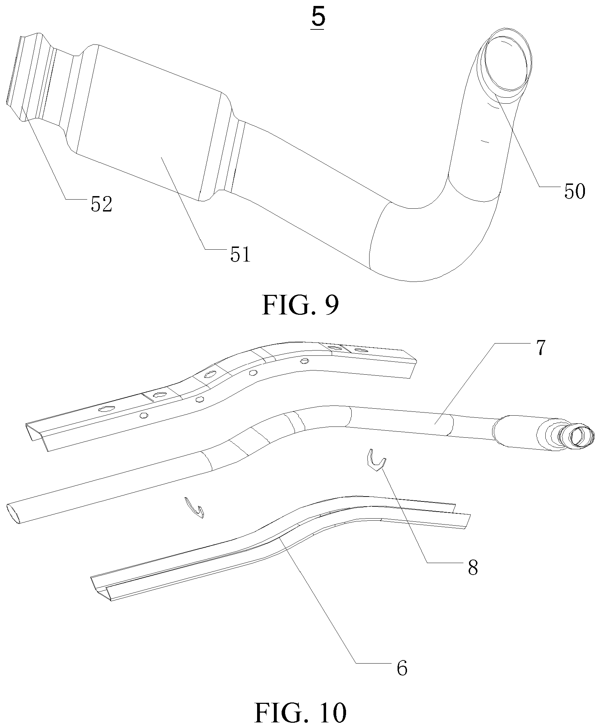

Based on this embodiment, in another embodiment, referring to FIG. 9, the third exhaust pipe 5 includes a first interface 50, a bellows 51, and a second interface 52.

The first interface 50 is configured to be connected to an exhaust pipe of an engine. The bellows 51 is configured to reduce vibration caused by engine exhaust. The second interface 52 is configured to be connected to the first exhaust pipe.

In this embodiment, the vibration of the engine exhaust and vibration of a powertrain are implemented through the bellows 51, and the structure is simplified and easy to implement, thereby reducing costs.

Based on this embodiment, in another embodiment, the lower vehicle body arrangement structure further includes a rear subframe longitudinal beam 6 and a second exhaust pipe 7.

The rear subframe longitudinal beam 6 is provided with a second cavity. A first end of the second exhaust pipe 7 is connected to a second end of the first exhaust pipe, and the second exhaust pipe 7 is accommodated in the second cavity.

In this embodiment, the second exhaust pipe 7 is accommodated in the second cavity. This improves arrangement space utilization of the lower vehicle body, and reduces assembly difficulty of the rear subframe longitudinal beam 6 and the second exhaust pipe 7.

Based on this embodiment, in another embodiment, referring to FIG. 10, the lower vehicle body arrangement structure further includes a heat insulation device 8.

The heat insulation device is arranged between the second exhaust pipe 7 and the rear subframe longitudinal beam 6, and the heat insulation device is configured to limit the second exhaust pipe 7 and reduce heat transferred from the second exhaust pipe 7 to the rear subframe longitudinal beam 6.

In this embodiment, by the arrangement of the heat insulation device, excessive heat of the exhaust pipe is prevented from being transferred to the outside, so as to prevent the rear subframe longitudinal beam 6 from overheating.

Based on this embodiment, in another embodiment, the heat insulation device is made of a heat insulation material, and the heat insulation device is provided with a U-shaped groove. The second exhaust pipe 7 is accommodated in the U-shaped groove.

The heat insulation device of this embodiment can insulate heat to prevent the rear subframe longitudinal beam 6 from overheating, and can also stabilize the second exhaust pipe 7 through the U-shaped groove.

It should be noted that, a bellows is further arranged at a tail end of the second exhaust pipe 7, and achieves a triple shock absorption effect with the bellows of the third exhaust pipe 5 and the shock-absorbing part 41 of the first exhaust pipe, thereby enhancing the shock absorption effect.

Based on this embodiment, in another embodiment, the lower vehicle body arrangement structure further includes a muffling device 9, and the muffling device is connected to a second end of the second exhaust pipe 7.

In this embodiment, by the arrangement of the muffling device, exhaust pulsation is reduced, and exhaust noise is reduced as much as possible, thereby improving NVH performance of the whole vehicle.

According to another aspect of the present disclosure, a vehicle is provided, including the lower vehicle body arrangement structure described in the above embodiment. Therefore, the vehicle has all the technical features and advantages of the above-mentioned lower vehicle body arrangement structure. Details are not described herein. In general, the vehicle has at least the advantages of high battery energy density, good heat dissipation effect of an exhaust pipe, and high safety performance of the whole vehicle.

In the description of the present disclosure, it should be understood that orientation or position relationships indicated by the terms such as "center", "longitudinal", "transverse", "length", "width", "thickness", "above", "below", "front", "rear", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease of description of the present disclosure and simplification of the description, rather than indicating or implying that the mentioned apparatus or element needs to have a particular orientation or be constructed and operated in a particular orientation. Therefore, such terms should not be construed as limiting the present disclosure.

**In** addition, terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. In the descriptions of the present disclosure, "a plurality of/multiple" means two or more, unless otherwise definitely and specifically limited.

In the present disclosure, unless otherwise explicitly specified or defined, the terms such as "mount", "connect", "connection", and "fix" should be understood in a broad sense. For example, the connection may be a fixed connection, a detachable connection, or an integral connection; may be a mechanical connection or an electrical connection; and may be a direct connection, an indirect connection by an intermediate medium, internal communication between two elements, or an interaction relationship between two elements. A person of ordinary skill in the art may understand the specific meanings of the foregoing terms in the present disclosure according to specific situations.

In the present disclosure, unless otherwise explicitly specified or defined, that the first feature is located "above" or "below" the second feature may be that the first feature is in a direct contact with the second feature, or the first feature is in an indirect contact with the second feature by an intermediate medium. In addition, that the first feature is "above" the second feature may indicate that the first feature is over or obliquely above the second feature, or may merely indicate that a level height of the first feature is higher than that of the second feature. That the first feature is "below" the second feature may be that the first feature is under or obliquely below the second feature, or may merely indicate that the level height of the first feature is lower than that of the second feature.

In the description of this specification, descriptions with reference to the terms such as "an embodiment", "some embodiments", "example", "specific example", or "some examples" mean that specific features, structures, materials, or characteristics described with reference to the embodiment or example are included in at least one embodiment or example of the present disclosure. In this specification, schematic descriptions of the foregoing terms are not necessarily directed at the same embodiment or example. Besides, the specific features, the structures, the materials or the characteristics that are described may be combined in proper manners in any one or more embodiments or examples. In addition, without any contradiction, a person skilled in the art may bind and combine different embodiments or examples and features of the different embodiments or examples that are described in this specification.

Although the embodiments of the present disclosure have been shown and described above, it can be understood that, the foregoing embodiments are exemplary and should not be understood as a limitation on the present disclosure. A person of ordinary skill in the art can make changes, modifications, replacements, and variations to the foregoing embodiments within the scope of the present disclosure.

## Claims

1. A lower vehicle body arrangement structure, comprising:
a vehicle body longitudinal beam;
an exhaust pipe mounting bracket, the exhaust pipe mounting bracket being connected to the vehicle body longitudinal beam, and a first cavity being formed between the exhaust pipe mounting bracket and the vehicle body longitudinal beam; and
a first exhaust pipe, the first exhaust pipe being accommodated in the first cavity, and a projection of the first exhaust pipe on a horizontal plane at least partially overlapping a projection of the vehicle body longitudinal beam on the horizontal plane.

2. The lower vehicle body arrangement structure according to claim 1, wherein the exhaust pipe mounting bracket is a battery pack fixing bracket.

3. The lower vehicle body arrangement structure according to claim 1 or 2, wherein an inner side of the vehicle body longitudinal beam is provided with a first recessed portion, a second recessed portion is formed in the exhaust pipe mounting bracket, and the first recessed portion is provided opposite to the second recessed portion to form the first cavity.

4. The lower vehicle body arrangement structure according to claim 1, wherein the exhaust pipe mounting bracket is a battery pack fixing bracket, the battery pack fixing bracket comprises a first connecting section and a second connecting section, the first connecting section and the second connecting section are arranged at an included angle to form a second recessed portion, the second connecting section is connected to the vehicle body longitudinal beam, and the first connecting section is configured as a partial structure of a battery pack protective frame.

5. The lower vehicle body arrangement structure according to claim 4, wherein the second connecting section extends outward from a bottom of the first connecting section.

6. The lower vehicle body arrangement structure according to any one of claims 1 to 5, further comprising:
a shock-absorbing device, the shock-absorbing device being arranged in the first cavity, and the first exhaust pipe being arranged on the shock-absorbing device.

7. The lower vehicle body arrangement structure according to claim 6, wherein the shock-absorbing device comprises:
a mounting part, the mounting part being connected to the exhaust pipe mounting bracket; and
a shock-absorbing part, the shock-absorbing part being arranged at the mounting part.

8. The lower vehicle body arrangement structure according to claim 7, wherein the shock-absorbing part is provided with a U-shaped groove, and the first exhaust pipe is accommodated in the U-shaped groove.

9. The lower vehicle body arrangement structure according to claim 7 or 8, wherein the first exhaust pipe is provided with a first limiting member, the shock-absorbing part is provided with a second limiting member, and the first limiting member and the second limiting member cooperate to limit the first exhaust pipe.

10. The lower vehicle body arrangement structure according to claim 9, wherein one of the first limiting member and the second limiting member is a protrusion, the other is a limiting hole, and the protrusion is matched with the limiting hole.

11. The lower vehicle body arrangement structure according to claim 7, wherein the exhaust pipe mounting bracket is provided with a groove, the mounting part is arranged in the groove, and part of the shock-absorbing part is embedded in the groove.

12. The lower vehicle body arrangement structure according to any one of claims 1 to 11, wherein the first exhaust pipe comprises:
a first pipe body, an exhaust channel suitable for circulating engine exhaust being formed inside the first pipe body; and
a second pipe body, the second pipe body covering part of a periphery of the first pipe body, and a heat insulation layer being arranged between the first pipe body and the second pipe body.

13. The lower vehicle body arrangement structure according to any one of claims 1 to 12, further comprising:
a rear subframe longitudinal beam, the rear subframe longitudinal beam being provided with a second cavity; and
a second exhaust pipe, a first end of the second exhaust pipe being connected to the first exhaust pipe, and the second exhaust pipe being accommodated in the second cavity.

14. The lower vehicle body arrangement structure according to claim 13, further comprising:
a heat insulation device, the heat insulation device being arranged between the second exhaust pipe and the rear subframe longitudinal beam, and the heat insulation device being configured to limit the second exhaust pipe and reduce heat transferred from the second exhaust pipe to the rear subframe longitudinal beam.

15. The lower vehicle body arrangement structure according to any one of claims 1 to 5, wherein the vehicle body longitudinal beam is a sill beam.

16. A vehicle, comprising the lower vehicle body arrangement structure according to any one of claims 1 to 15.
